# EUROPÄISCHE PATENTANMELDUNG

(11) **EP 0 601 384 A1**
(43) Veröffentlichungstag der Anmeldung: **15.06.1994**
(21) Anmeldenummer: 93118860.1
(22) Anmeldetag: 24.11.1993
(51) Int. Cl.: B01D 21/20

(54) **Antrieb für die Wellen von Räum-, Krähl- oder Rührwerken**

(30) Priorität: 09.12.1992 DE 9216781 U
(71) Anmelder: PASSAVANT-WERKE AG, D-65322 Aarbergen 7 (DE)
(72) Erfinder: Meckmann, Peter, D-65624 Altendiez (DE); Skocic, Ante, D-65549 Limburg (DE); Scheffler, Jürgen, D-65558 Lohrheim (DE)

(57) **Zusammenfassung**

Der Antrieb für in Rundklärbecken umlaufende Räum-, Eindick- und Krählwerke enthält mindestens eine Kugeldrehverbindung, die aus einem Innenring und einem über einen Zahnkranz mit Außenverzahnung angetriebenen Außenring besteht. Das Gestell, in dem die Kugeldrehverbindung und ihr Antrieb gelagert sind, ist nun nach innen wannenförmig vergrößert und bildet somit eine Ringwanne, in der Dauerschmiermittel untergebracht ist. Der mit dem Außenring verbundene Flansch, der die Verbindung zu der Zentralwelle des Räum- bzw. Krählwerks herstellt, ist erfindungsgemäß gekröpft über die Innenwand der Ringwanne gezogen. Diese neue Konstruktion ermöglicht den Austausch der Kugeldrehverbindung und des Antriebs ohne Ausbau der Ringwanne und des Räum- bzw. Krählwerks.

## Beschreibung

Die Neuerung betrifft einen Antrieb für Wellen von Räum-, Krähl- oder Rührwerken in Rundbecken für die Wasser- und Abwasserbehandlung oder die Brauchwasseraufbereitung.

Die Wellen für solche Bauteile sind auf einer das Becken überspannenden Brücke gelagert und auch von dort angetrieben. Üblicherweise ist ein kastenförmiges Gestell vorgesehen, das sich auf der Brücke abstützt und die als Lager für die Welle dienende Kugeldrehverbindung und den Zahnkranz aufnimmt. In den Zahnkranz greift von oben das Ritzel des Antriebsmotors ein. Der Außenring der Kugeldrehverbindung ist über einen Flansch mit der Welle verbunden (DE-U 86 05 020).

Der Nachteil einer solchen Bauweise ist darin zu sehen, daß Lager und Antrieb ständig geschmiert werden müssen. Das Schmiermittel tropft ungehindert in das Becken. Beim Austausch von Verschleißteilen muß das Becken entleert werden und anschließend die Beckenkonstruktion am Beckenboden abgefangen werden. Das ist äußerst arbeitsaufwendig. Die Aufgabe, diese unerwünschten Vorgänge zu vermeiden, wird nunmehr dadurch gelöst, daß das die Zahnrad- und Lagereinheit außen umfassende Gestell kastenförmig geschlossen und nach innen als einen Boden und eine Innenwand aufweisende Ringwanne fortgesetzt ist, und daß der den Zahnkranz mit der Welle verbindende Antriebsflansch gekröpft über die Innenwand der Ringwanne hochgezogen ist. Auf diese Weise entsteht eine geschlossene Wanne, in der die Lager- und Antriebselemente untergebracht sind und die mit Schmiermittel gefüllt werden kann. Montage und Kontrolle werden durch eine solche Schmiermittelwanne nicht behindert und verteuert. Alle Antriebs- und Lagerelemente können von oben aus montiert werden, ohne die Welle demontieren zu müssen. Der Ringflansch kann ebenfalls von oben unterbaut werden, so daß die Rührerkonstruktion im gefüllten Becken verbleiben kann. Ein zusätzlicher Effekt ist die gasdichte Ausführung der Antriebseinheit, z.B. bei geschlossenem Klärbecken.

Vorzugsweise wird die Ringwanne oben durch eine auf das Gestell aufgelegte Platte verschlossen, die den Antriebsmotor aufnimmt und an der unten der Innenring der Kugeldrehverbindung lösbar befestigt ist. Die Schraubbefestigung ist als mehrere in dem Innenring montierte Stehbolzen ausgebildet, die oberhalb der Platten verschraubt werden. Beim Lösen der Stehbolzen sinkt der Antriebsflansch mit der Welle auf den Boden der Ringwanne und wird dort abgestützt. Die Lager- und Antriebselemente bleiben in der Ringwanne und können ohne Beckenentleerung problemlos ausgewechselt werden. Der Antrieb ist, bis auf die Ölwechsel, wartungsfrei.

In den Abbildungen sind zwei bevorzugte Ausführungsformen der Neuerung dargestellt, und zwar in den Fig. 1 und 2 eine Antriebseinheit für eine Welle und in Fig. 3 und 4 für zwei konzentrisch ineinanderliegende Wellen.

In Fig, 1 ist der Schnitt durch die Lager- und Antriebseinheit einer Welle 1 zu sehen. Nicht dargestellt ist die das Behandlungsbecken überspannende Brücke, auf der sich die Einheit abstützt. Das Gestell für den Getriebemotor 2 besteht aus einem Profilring 3 und einer Platte 4, die auf den Profilring dicht aufgesetzt ist. An der Unterseite der Platte 4 ist ein Distanzring 5 angeschweißt, durch den die mit einer Passung versehenen Stehbolzen 6 zur Befestigung des Innenrings 7 der Kugeldrehverbindung 8 verlaufen. Der Außenring 9 der Kugeldrehverbindung 8 enthält gleichzeitig die Außenverzahnung 10 für das Antriebsritzel 11.

An diesen Außenring 9 ist der Antriebsflansch 12 für die Welle 1 mittels Schrauben 13 von unten angesetzt. Der Antriebsflansch 12 verläuft nach oben gekröpft und ist mit dem Mittelabschnitt mit der Stirnseite der Welle fest verbunden. Die Verbindung ist durch mehrere Rippen 14 versteift.

Diese Antriebs- und Lagereinheit ist von einer Schmiermittelwanne 15 unterfangen, die als innere Fortsetzung des Profilrings 3 ausgebildet ist und aus einem Boden 16 und einer Innenwand 17 besteht. Die Innenwand 17 ragt in den Spalt zwischen Versteifungsrippen 14 und Kröpfung des Antriebsflansches 12.

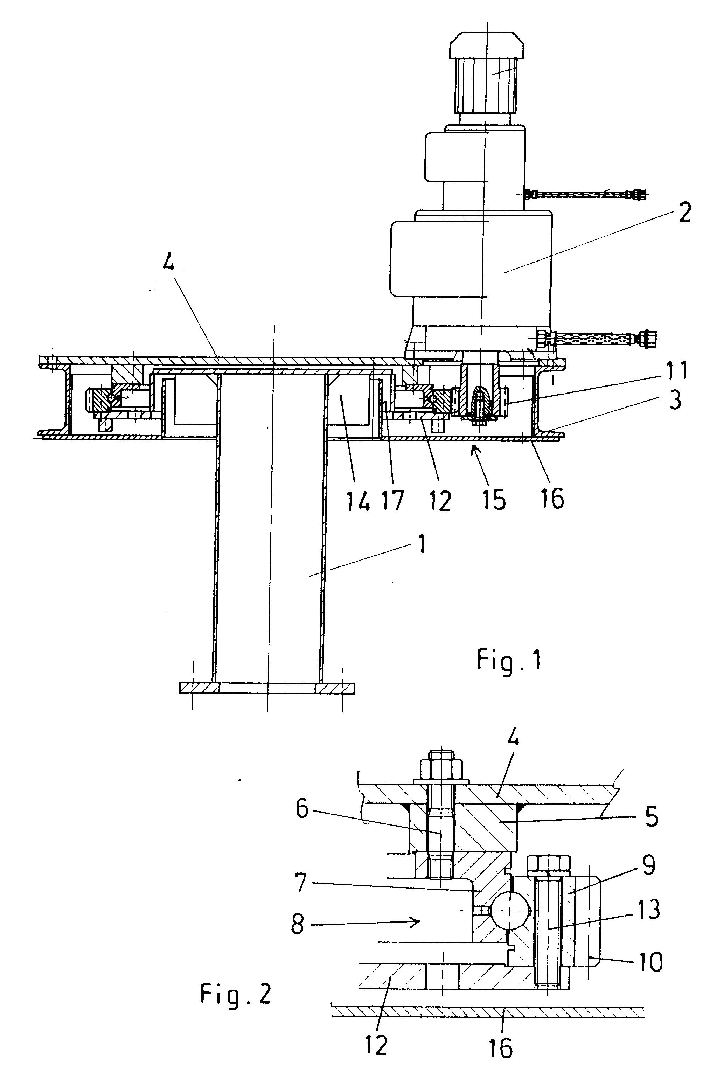

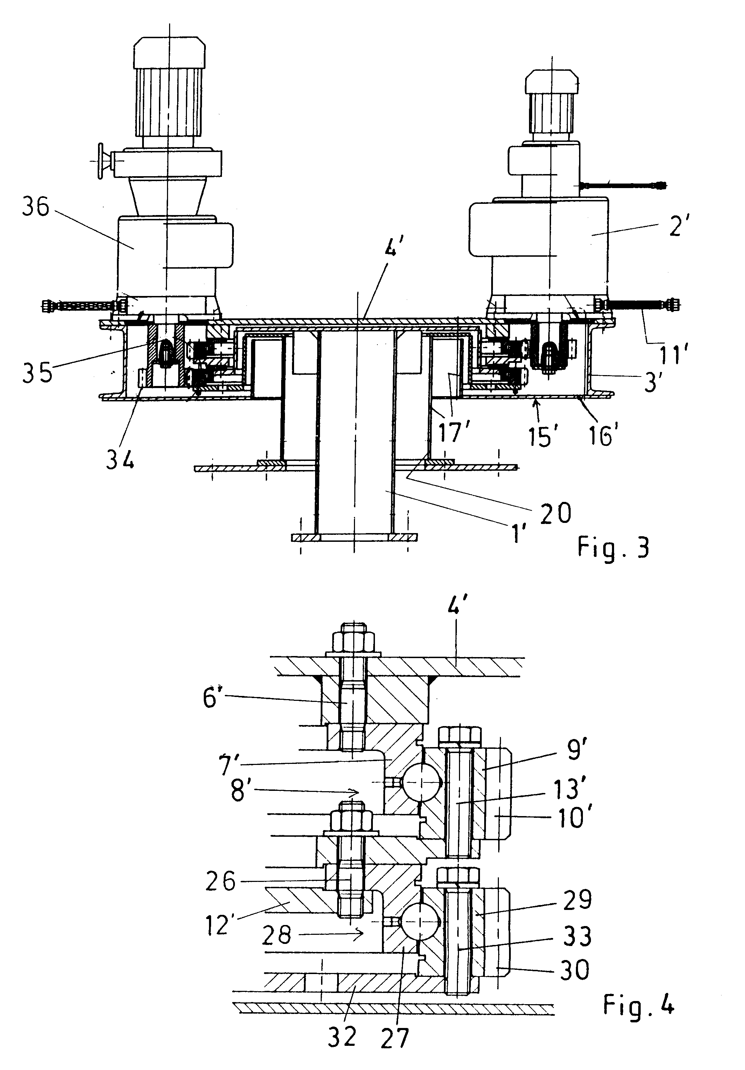

Die Lager- und Antriebseinheit nach den Figuren 3 und 4 unterscheidet sich von der nach den Figuren 1 und 2 durch eine zweite, die erste 1' konzentrisch umgebende Hohlwelle 20 und die zugehörige Lager- und Antriebseinheit. Diese Einheit liegt unter der Einheit für die erste Welle 1' und enthält wieder eine Kugeldrehverbindung 28, die aus einem mit dem Außenring 9' der oberen Kugeldrehverbindung 8' durch Stehbolzen 26 verbundenen Innenring 27 und einem mit Stirnverzahnung 30 versehenen Außenring 29 besteht. Der Antriebsflansch 12' für die innere Welle 1' ist am Innenring 27 der unteren Kugeldrehverbindung 28 angesetzt, der Antriebsflansch 32 für die Hohlwelle 20 am Außenring 29 (Verschraubung 33). Dieser zweite Antriebsflansch 32 ist ebenfalls gekröpft über die Innenwand 17' der Ringwanne 15' nach oben gezogen und endet an der Stirnseite der Hohlwelle 20. Als Antrieb für die Hohlwelle dient ein Getriebemotor 36 mit verlängertem Antriebszapfen 35 und einem Ritzel 34.

Bei beiden Ausführungsformen sind die Antriebs- und Lagereinheiten voll in die Schmiermittelwanne eingetaucht und können dauergeschmiert werden. Eine Ölstandskontrolle erfolgt über einen nicht abgebildeten Ölmeßstab; weitere Wartungsarbeiten sind nicht erforderlich. Sind Austauscharbeiten nötig, wird nur die Platte 4, 4' abgenommen. Die Verschraubungen der Antriebsflansche und Kugeldrehverbindungen sind dann von oben frei zugänglich.

## Patentansprüche

1. Antrieb für die von oben angetriebenen Wellen von Räum-, Krähl- oder Rührwerken in Becken für die Wasser- oder Abwasserbehandlung, enthaltend einen mit der Welle verbundenen äußeren Antriebsflansch und einen daran befestigten Zahnkranz mit von oben eingreifendem, von einem auf das Gestell aufgesetzten Getriebemotor angetriebenen Ritzel, **dadurch gekennzeichnet,** daß das die Lager- und Antriebseinheit (7...13, 7'...13', 27...33) außen umfassende Gestell (3, 3') kastenförmig geschlossen und nach innen als einen Boden (16, 16') und eine Innenwand (17, 17') aufweisende Ringwanne (15, 15') fortgesetzt ist, und daß der Antriebsflansch (12, 12', 32) gekröpft über die Innenwand (17, 17') der Ringwanne (15, 15') hochgezogen ist.

2. Antrieb nach Anspruch 1 mit einer Kugeldrehverbindung als Lager für die Welle, **dadurch gekennzeichnet,** daß die Kugeldrehverbindung (8, 8', 28) ebenfalls noch unterhalb der Oberkante der Innenwand (17, 17') der Ringwanne (15, 15') angeordnet ist.

3. Antrieb nach Anspruch 2, **dadurch** **gekennzeichnet,** daß Ringwanne (15, 15') und Antriebsflansch (12, 12', 32) von einer auf das kastenförmige Gestell (3, 3') aufgelegten Platte (4, 4') abgedeckt sind, die den Getriebemotor (2, 2', 36) aufnimmt und an der der Innenring (7, 7') der Kugeldrehverbindung (8, 8') lösbar befestigt ist.

4. Antrieb nach Anspruch 1 bis 3, mit einer zweiten, über einen Zahnkranz angetriebenen, die Welle konzentrisch umgebenden Hohlwelle für ein zweites Krähl- oder Räumwerk, **dadurch** **gekennzeichnet,** daß der Antriebsflansch (32) für die Hohlwelle (20) ebenfalls gekröpft und unterhalb des Antriebsflansches (12') für die Innenwelle (1') über die Innenwand (17') der Ringrinne (15') zur Hohlwelle (20) gezogen ist.
